# FASCICULE DE BREVET EUROPEEN

(11) **EP 3 238 056 B1**
(45) Date de publication et mention de la délivrance du brevet: **29.09.2021**
(21) Numéro de dépôt: 15821139.1
(22) Date de dépôt: 16.12.2015
(51) Int. Cl.: G06F 9/50, G06F 9/48

(54) **METHODE D'ORDONNANCEMENT DE TACHES AU NIVEAU DES NOEUDS D'UN CLUSTER INFORMATIQUE, ORDONNANCEUR DE TACHES ET CLUSTER ASSOCIES**
VERFAHREN ZUM ORGANISIEREN VON AUFGABEN AN DEN KNOTEN EINES COMPUTER-CLUSTERS, ZUGEHÖRIGER AUFGABENORGANISATOR UND CLUSTER
METHOD FOR ORGANISING TASKS IN THE NODES OF A COMPUTER CLUSTER, ASSOCIATED TASK ORGANISER AND CLUSTER

(30) Priorité: 24.12.2014 FR 1463319
(43) Date de publication de la demande: 01.11.2017
(73) Titulaire: Bull SAS, 78340 Les Clayes-sous-Bois (FR)
(72) Inventeur: MAUPU, Yann, 31000 Toulouse (FR); CADEAU, Thomas, 91300 Massy (FR); DANIEL, Matthieu, 92160 Antony (FR)
(74) Mandataire: Plasseraud IP
(86) Numéro de dépôt international: PCT/FR2015/053533
(87) Numéro de publication internationale: WO 2016/102818

(56) Documents cités:
- US-A1- 2004 153 708
- EJARQUE J ET AL: "SLA-Driven Semantically-Enhanced Dynamic Resource Allocator for Virtualized Service Providers", ESCIENCE, 2008. ESCIENCE '08. IEEE FOURTH INTERNATIONAL CONFERENCE ON, IEEE, PISCATAWAY, NJ, USA, 7 décembre 2008 (2008-12-07), pages 8-15, XP031399598, ISBN: 978-1-4244-3380-3
- J.S. CHASE ET AL: "Dynamic virtual clusters in a grid site manager", HIGH PERFORMANCE DISTRIBUTED COMPUTING, 2003. PROCEEDINGS. 12TH IEEE INTERNATIONAL SYMPOSIUM ON, 1 janvier 2003 (2003-01-01), pages 90-100, XP055170017, DOI: 10.1109/HPDC.2003.1210019 ISBN: 978-0-76-951965-4
- SHAW SUBHADRA BOSE ET AL: "A survey on scheduling and load balancing techniques in cloud computing environment", 2014 INTERNATIONAL CONFERENCE ON COMPUTER AND COMMUNICATION TECHNOLOGY (ICCCT), IEEE, 26 septembre 2014 (2014-09-26), pages 87-95, XP032715945, DOI: 10.1109/ICCCT.2014.7001474 ISBN: 978-1-4799-6757-5 [extrait le 2015-01-05]
- ZHANG QI ET AL: "Dynamic Heterogeneity-Aware Resource Provisioning in the Cloud", IEEE TRANSACTIONS ON CLOUD COMPUTING, IEEE COMPUTER SOCIETY, USA, vol. 2, no. 1, 1 mars 2014 (2014-03-01), pages 14-28, XP011546239, DOI: 10.1109/TCC.2014.2306427 [extrait le 2014-04-23]
- XU XIN ET AL: "A Novel Resource Scheduling Approach in Container Based Clouds", 2014 IEEE 17TH INTERNATIONAL CONFERENCE ON COMPUTATIONAL SCIENCE AND ENGINEERING, IEEE, 19 décembre 2014 (2014-12-19), pages 257-264, XP032730270, DOI: 10.1109/CSE.2014.77 [extrait le 2015-01-26]
- LI QING ET AL: "An Adaptive Resource Sharing Platform for Internet Data Center", 2013 IEEE 10TH INTERNATIONAL CONFERENCE ON HIGH PERFORMANCE COMPUTING AND COMMUNICATIONS & 2013 IEEE INTERNATIONAL CONFERENCE ON EMBEDDED AND UBIQUITOUS COMPUTING, IEEE, 13 novembre 2013 (2013-11-13), pages 1179-1186, XP032606412, DOI: 10.1109/HPCC.AND.EUC.2013.167 [extrait le 2014-06-11]
- WENYU ZHOU ET AL: "VMCTune: A Load Balancing Scheme for Virtual Machine Cluster Using Dynamic Resource Allocation", GRID AND COOPERATIVE COMPUTING (GCC), 2010 9TH INTERNATIONAL CONFERENCE ON, IEEE, PISCATAWAY, NJ, USA, 1 novembre 2010 (2010-11-01), pages 81-86, XP031831026, ISBN: 978-1-4244-9334-0
- LIGANG HE ET AL: "Optimizing Resource Consumptions in Clouds", GRID COMPUTING (GRID), 2011 12TH IEEE/ACM INTERNATIONAL CONFERENCE ON, IEEE, 21 September 2011 (2011-09-21), pages 42-49, XP032021760, DOI: 10.1109/GRID.2011.15 ISBN: 978-1-4577-1904-2
- Ligang He ET AL: "Developing resource consolidation frameworks for moldable virtual machines in clouds", FUTURE GENERATIONS COMPUTER SYSTEMS., vol. 32, 1 March 2014 (2014-03-01), pages 69-81, XP055697016, NL ISSN: 0167-739X, DOI: 10.1016/j.future.2012.05.015
- I Goiri ET AL: "Elastic Management of Tasks in Virtualized Environment", , 18 September 2009 (2009-09-18), XP055695490, Retrieved from the Internet: URL:https://upcommons.upc.edu/bitstream/ha ndle/2117/10099/Jornadas09g.pdf [retrieved on 2020-05-14]
- "Resource Management with VMware DRS", 20060101 , 1 January 2006 (2006-01-01), pages 1-24, XP007912868, Retrieved from the Internet: URL:http://www.vmware.com/pdf/vmware_drs_w p.pdf
- GANESHA SHANMUGANATHAN ET AL: "Defragmenting the cloud using demand-based resource allocation", MEASUREMENT AND MODELING OF COMPUTER SYSTEMS, ACM, 2 PENN PLAZA, SUITE 701 NEW YORK NY 10121-0701 USA, 17 June 2013 (2013-06-17), pages 67-80, XP058020676, DOI: 10.1145/2465529.2465763 ISBN: 978-1-4503-1900-3

## Description

### DOMAINE DE L'INVENTION

L'invention concerne une méthode d'ordonnancement de tâches au niveau d'au moins certains nœuds d'un cluster informatique, un ordonnanceur de tâches à affecter aux nœuds d'un cluster informatique, et un cluster informatique comprenant un tel ordonnanceur de tâches.

### CONTEXTE DE L'INVENTION

Selon un premier art antérieur, il est connu d'arrêter l'exécution de la tâche standard au niveau du nœud considéré, et d'affecter les ressources du nœud considéré pour exécuter la tâche prioritaire avant de pouvoir reprendre l'exécution de la tâche standard ensuite.

L'inconvénient de ce premier art antérieur est de devoir intégralement recommencer la tâche standard interrompue, tout le traitement déjà réalisé au niveau de cette tâche standard étant complètement perdu, ou à tout le moins perdu depuis le dernier point de synchronisation.

Or, un tel traitement, même depuis le dernier point de synchronisation, peut facilement représenter plusieurs heures, voire plusieurs jours, de traitement au niveau d'un grand nombre de nœuds d'un cluster informatique de taille importante, ce qui représente une masse de traitement ou un temps de calcul considérables, lesquels sont irrémédiablement perdus. Par ailleurs, certaines tâches sont exécutées sans aucun point de synchronisation.

Selon un deuxième art antérieur, il est connu d'attendre la fin de l'exécution de cette tâche standard, ou à tout le moins son prochain point de synchronisation, puis de faire passer la tâche prioritaire devant toutes les autres tâches standard en attente dans une queue de séquencement de ces tâches standard. Aucun traitement de tâche standard déjà effectué n'est alors perdu.

Mais, la tâche prioritaire doit attendre sinon la fin de la tâche standard en cours d'exécution ou à tout le moins son exécution jusqu'au prochain point de synchronisation, ce qui peut être très long. Le retardement correspondant d'une tâche prioritaire critique peut être très dommageable.

La publication par EJARQUE J ET AL: "SLA-Driven Semantically-Enhanced Dynamic Resource Allocator for Virtualized Service Providers" décrit l'allocation dynamique de ressources à des machines virtuelles selon leur priorité.

La publication "Resource Management with VMware DRS" (Extrait de l'Internet:URL:http://www.vmware.com/pdf/vmware-drs-wp.pdf) décrit un système d'allocation dynamique de ressources à des machines virtuelles.

### RESUME DE L'INVENTION

Le but de la présente invention est de fournir une méthode d'ordonnancement des tâches au niveau des nœuds d'un cluster informatique palliant au moins partiellement les inconvénients précités.

Plus particulièrement, l'invention vise à fournir une méthode d'ordonnancement des tâches au niveau des nœuds d'un cluster informatique, laquelle méthode d'abord lance au moins deux containers, un container standard et un container prioritaire, sur un nœud, puis bascule des ressources du container standard vers le container prioritaire, lorsqu'une tâche prioritaire survient pendant que le nœud exécute une tâche standard dans le container standard, ceci afin de pouvoir, d'une part exécuter la tâche prioritaire en urgence dans le container prioritaire avec suffisamment de ressources, et d'autre part continuer à exécuter la tâche standard, même au ralenti, sans devoir l'arrêter et donc sans perdre le travail de traitement déjà effectué. En effet, une tâche arrêtée en cours, doit être intégralement recommencée, tout le travail déjà réalisé étant alors perdu.

De cette manière, la gestion des niveaux de priorités de l'ordonnanceur de tâches est optimisée, et la bande passante d'un tel ordonnanceur de tâches est globalement augmentée. La flexibilité d'utilisation d'un cluster implémentant cette méthode d'ordonnancement des tâches au niveau des nœuds du cluster s'en trouve également nettement améliorée.

A cette fin, la présente invention propose une méthode d'ordonnancement de tâches, au niveau d'au moins certains nœuds d'un cluster informatique, comprenant : d'abord, le lancement de deux containers sur chacun desdits nœuds, un container standard et un container prioritaire, ensuite, pour tout ou partie desdits nœuds à deux containers, au niveau de chaque nœud, tant qu'une tâche prioritaire ne survient pas, l'affectation de ou des ressources disponibles du nœud à son container standard pour exécuter une tâche standard, son container prioritaire n'exécutant pas de tâche, lorsqu'une tâche prioritaire survient, le basculement dynamique d'une partie seulement des ressources de son container standard vers son container prioritaire, de manière à ce que, d'une part la tâche prioritaire soit exécutée dans le container prioritaire avec la partie basculée des ressources, et d'autre part la tâche standard continue d'être exécutée, sans être arrêtée, dans le container standard avec la partie non basculée des ressources.

Les ressources disponibles du nœud sont les ressources non nécessitées par le fonctionnement interne du nœud ou par l'ouverture du container prioritaire. En cas d'absence de tâche prioritaire, préférentiellement la majorité, voire l'essentiel ou la quasi-totalité des ressources disponibles est affectée au container standard.

Les ressources considérées englobent au moins les ressources processeur, et préférentiellement également les ressources mémoire vive. Les ressources considérées peuvent optionnellement englober encore les ressources entrées/sorties et/ou les ressources réseau.

Ladite tâche standard peut continuer à être exécutée, sans être arrêtée, jusqu'à la terminaison de cette tâche standard ou jusqu'à un prochain point de synchronisation de cette tâche standard, permettant alors de ne pas perdre le traitement partiel déjà effectué pour cette tâche. L'important est de ne pas arrêter l'exécution de la tâche standard dans des conditions où le travail déjà exécuté pour cette tâche standard va être perdu, mais au contraire, soit de ne pas du tout arrêter l'exécution de la tâche standard soit de n'arrêter l'exécution de la tâche standard que dans des conditions où le travail déjà exécuté pour cette tâche standard peut être récupéré sans pertes.

A cette fin, la présente invention propose aussi un cluster informatique comprenant : plusieurs nœuds, un ordonnanceur de tâches à affecter auxdits nœuds, configuré, pour au moins certains desdits nœuds, de manière à : d'abord, lancer deux containers sur chacun desdits nœuds, un container standard et un container prioritaire, ensuite, pour tout ou partie desdits nœuds à deux containers, au niveau de chaque nœud, tant qu'une tâche prioritaire ne survient pas, affecter des ressources du nœud à son container standard pour exécuter une tâche standard, son container prioritaire n'exécutant pas de tâche, lorsqu'une tâche prioritaire survient, basculer dynamiquement une partie seulement des ressources de son container standard vers son container prioritaire, de manière à ce que, d'une part la tâche prioritaire soit exécutée dans le container prioritaire avec la partie basculée des ressources, et d'autre part la tâche standard continue d'être exécutée, sans être arrêtée, dans le container standard avec la partie non basculée des ressources.

A cette fin, la présente invention propose encore un ordonnanceur de tâches à affecter aux nœuds d'un cluster informatique, configuré, pour au moins certains desdits nœuds, de manière à : d'abord, lancer deux containers sur chacun desdits nœuds, un container standard et un container prioritaire, ensuite, pour tout ou partie desdits nœuds à deux containers, au niveau de chaque nœud, tant qu'une tâche prioritaire ne survient pas, affecter des ressources du nœud à son container standard pour exécuter une tâche standard, son container prioritaire n'exécutant pas de tâche, lorsqu'une tâche prioritaire survient, basculer dynamiquement une partie seulement des ressources de son container standard vers son container prioritaire, de manière à ce que, d'une part la tâche prioritaire soit exécutée dans le container prioritaire avec la partie basculée des ressources, et d'autre part la tâche standard continue d'être exécutée, sans être arrêtée, dans le container standard avec la partie non basculée des ressources.

Il pourrait également être envisagé d'installer plusieurs machines virtuelles sur chaque nœud du cluster, mais la gestion de plusieurs machines virtuelles sur un même nœud réel engendrerait une perte importante des performances de traitement des tâches au niveau de ce nœud réel. Cette perte est nettement plus importante dans le cas d'une gestion d'une deuxième machine virtuelle que dans le cas d'une gestion d'un deuxième container, d'un ordre de grandeur supérieur, par exemple environ d'un facteur 10 (par exemple pertes de performances de l'ordre de 30% au lieu de pertes de performances de l'ordre de 3%).

Il pourrait également être envisagé d'installer plusieurs « chroots » sur chaque nœud du cluster, mais il ne serait alors pas possible de basculer dynamiquement des ressources d'un chroot vers un autre chroot, au niveau d'un nœud exécutant une tâche standard et recevant une tâche prioritaire pendant qu'il exécute une tâche standard.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre de chacun des objets précédemment présentés.

De préférence, tant qu'une tâche prioritaire ne survient pas, toutes les ressources disponibles du nœud sont affectées à son container standard. De préférence, tant qu'une tâche prioritaire ne survient pas, au moins 90%, de préférence au moins 95%, des ressources du nœud sont affectées au container standard, et/ou moins de 5% des ressources du nœud sont affectées au container prioritaire. Ainsi, en mode normal, c'est-à-dire en l'absence de survenue de tâche prioritaire à effectuer en urgence, les performances du cluster sont similaires à celles qu'il aurait si les nœuds n'avaient pas chacun deux containers.

De préférence, une fois la tâche prioritaire terminée, les ressources ayant été basculées du container standard vers le container prioritaire sont rebasculées du container prioritaire vers le container standard. Ainsi, une fois le cluster revenu au mode normal, c'est-à-dire une fois la tâche prioritaire exécutée en urgence, les performances du cluster redeviennent similaires à celles qu'il aurait si les nœuds n'avaient pas chacun deux containers.

De préférence, lorsqu'une tâche prioritaire survient, le basculement des ressources est effectué par un ou plusieurs groupes de contrôle de virtualisation au niveau système d'exploitation disposés dans la couche noyau du nœud. Ainsi, le dimensionnement des ressources affectées aux différents containers, standard et prioritaire, est effectué au niveau du noyau du nœud hôte des containers, c'est-à-dire du nœud hébergeant les containers.

De préférence, chaque container possède son système d'exploitation lui permettant de communiquer directement avec le noyau du nœud hôte de ces containers standard et prioritaire, indépendamment du système d'exploitation dudit nœud hôte. Ainsi, chacun des containers, standard et prioritaire, peut se comporter comme un nœud virtuel et être considéré par l'ordonnanceur des tâches comme un nœud virtuel.

De préférence, ladite méthode est effectuée au niveau de la majorité des nœuds dudit cluster informatique, de préférence au niveau de tous les nœuds dudit cluster informatique. Ainsi, le cluster aura l'aptitude de gérer une tâche prioritaire requérant un volume de traitement plus important.

De préférence, au moins l'un des nœuds à deux containers, de préférence plusieurs nœuds à deux containers, plus de préférence la majorité des nœuds à deux containers, encore plus de préférence tous les nœuds à deux containers, est ou sont des nœuds de calcul. C'est effectivement au niveau des nœuds de calcul que la survenue d'une tâche prioritaire est la plus probable.

De préférence, chaque container est un container Linux. En effet, le container Linux d'une part est totalement adapté pour pouvoir être facilement redimensionné dynamiquement en cas de besoin, et d'autre part dispose d'une structure déjà manipulable par l'ordonnanceur de tâches sans modification notable de cet ordonnanceur de tâches.

De préférence, les ressources comprennent à la fois les ressources processeur et les ressources mémoire vive du nœud. Ce sont les ressources les plus importantes requises pour pouvoir exécuter en urgence une tâche prioritaire. De préférence, les ressources comprennent également les ressources entrées/sorties et les ressources réseau du nœud.

De préférence, toutes les ressources, processeur et mémoire vive, d'une même puce électronique du nœud ou d'un même réceptacle de processeur ou de mémoire vive, sont affectées au même container, soit toutes au container standard soit toutes au container prioritaire. Ainsi, on évite de partager des ressources processeur ou des ressources mémoire d'une même puce électronique entre différents containers, ce qui serait plus difficile à gérer au niveau du noyau du nœud hôte. Par exemple, dans le cas de deux processeurs, l'un est affecté au container prioritaire tandis que l'autre reste affecté au container standard. Par exemple, dans le cas de quatre processeurs, trois sont affectés au container prioritaire tandis que l'un des quatre reste affecté au container standard.

De préférence, la proportion des ressources à basculer du container standard vers le container prioritaire est paramétrable par l'administrateur du cluster. Ainsi, l'administrateur du cluster, en fonction de la fréquence et du type de tâches prioritaires susceptibles de survenir, peut optimiser la proportion de ressources à basculer pour d'une part exécuter dans le temps requis la tâche prioritaire tout en ralentissant le moins possible l'exécution de la tâche standard.

De préférence, lorsqu'une tâche prioritaire survient, au moins 50%, de préférence au moins 75% des ressources processeur du container standard sont basculées vers le container prioritaire. De préférence, lorsqu'une tâche prioritaire survient, au moins 50%, de préférence au moins 75% des ressources mémoire vive du container standard sont basculées vers le container prioritaire. La tâche prioritaire devant être effectuée généralement très vite, une majorité des ressources est alors affectée au container prioritaire dans lequel cette tâche prioritaire va être exécutée.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de nœud sur lequel sont lancés deux containers selon un mode de réalisation de l'invention.
La figure 2 représente schématiquement un exemple de fonctionnement de nœud sur lequel sont lancés deux containers, selon un mode de réalisation de l'invention, tant qu'une tâche prioritaire ne survient pas.
La figure 3 représente schématiquement un exemple de fonctionnement de nœud sur lequel ont été lancés deux containers, selon un mode de réalisation de l'invention, lorsqu'une tâche prioritaire survient.
La figure 4 représente schématiquement un exemple de déroulement des étapes de la méthode d'ordonnancement de tâches selon un mode de réalisation de l'invention.

### DESCRIPTION DETAILLEE DE L'INVENTION

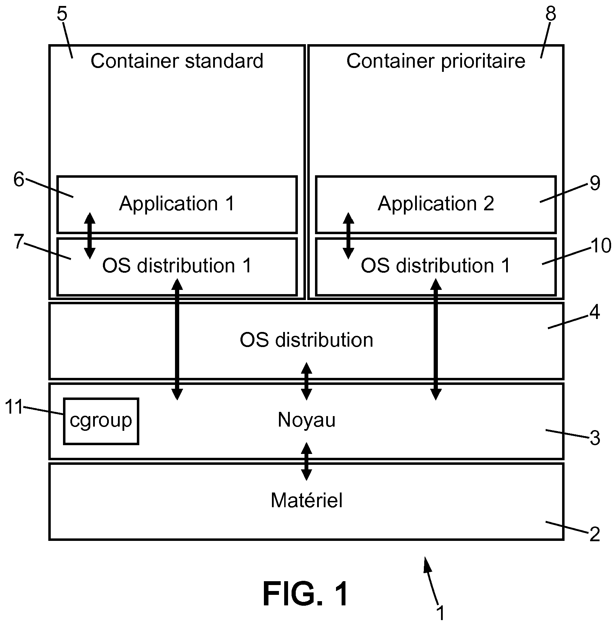

La figure 1 représente schématiquement un exemple de nœud sur lequel sont lancés deux containers selon un mode de réalisation de l'invention.

Un nœud 1 comporte un matériel 2 (« hardware » en langue anglaise), au-dessus duquel est disposé un noyau 3 (« kernel » en langue anglaise), au-dessus duquel est disposé un système d'exploitation 4 (« OS distribution » pour « Operating System Distribution » en langue anglaise). Le matériel 2 et le noyau 3 communiquent entre eux de manière bidirectionnelle. Le noyau 3 et le système d'exploitation 4 communiquent entre eux de manière bidirectionnelle. Le système d'exploitation 4 est appelé système d'exploitation hôte car c'est le système d'exploitation du nœud 1 lui-même. Le noyau 3 comprend un groupe de contrôle 11 (« cgroup » pour « control group » en langue anglaise). Un groupe de contrôle est un élément du noyau dont les fonctions essentielles sont de limiter, de comptabiliser, et d'isoler l'usage des ressources (incluant ressources processeur, ressources mémoire, ressources entrées/sorties, ressources réseau) par les différents groupes de processus. Les ressources mémoire sont essentiellement des ressources mémoire vive.

Sur le nœud 1, qui est un nœud réel, sont lancés deux containers 5 et 8. Un container (« container » en langue anglaise) est une forme de virtualisation de l'environnement d'exécution (incluant notamment processeur, mémoire vive, réseau, système de fichiers) où s'exécute un ensemble de processus isolés de la machine hôte ; un container est de préférence un container Linux (« LXC » ou « Linux Container » en langue anglaise). Le groupe de contrôle 11 du noyau 3 gère donc la répartition des ressources entre les deux containers 5 et 8. Un container Linux combine groupes de contrôle et espaces de nommage pour pouvoir constituer un environnement isolé permettant l'exécution de tâches indépendamment à la fois du nœud lui-même et de l'autre ou des autres containers de ce nœud.

Le container 5, qui est un container standard, comprend une application 6 située au-dessus d'un système d'exploitation 7. L'application 6 et le système d'exploitation 7 communiquent entre eux de manière bidirectionnelle. Le système d'exploitation 7 est le système d'exploitation du container 5 qui est indépendant du système d'exploitation 4 du nœud 1 et qui communique de manière bidirectionnelle directement avec le noyau 3 du nœud 1.

Le container 8, qui est un container prioritaire, comprend une application 9 située au-dessus d'un système d'exploitation 10. L'application 9 et le système d'exploitation 10 communiquent entre eux de manière bidirectionnelle. Le système d'exploitation 10 est le système d'exploitation du container 8 qui est indépendant du système d'exploitation 4 du nœud 1 et qui communique de manière bidirectionnelle directement avec le noyau 3 du nœud 1.

Les systèmes d'exploitation 7 et 10 sont représentés identiques entre eux et différents du système d'exploitation 4, sur la figure 1. Mais ces systèmes d'exploitations 4, 7 et 10 pourraient aussi être tous identiques entre eux, ou bien tous différents entre eux. Des exemples de système d'exploitation pour les containers 5 et 8 sont SUSE ou REDHAT ou UBUNTU.

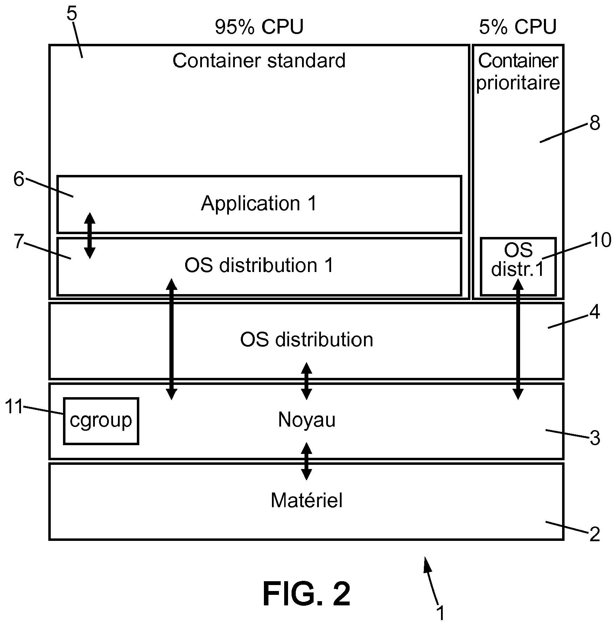

La figure 2 représente schématiquement un exemple de fonctionnement de nœud sur lequel sont lancés deux containers, selon un mode de réalisation de l'invention, tant qu'une tâche prioritaire ne survient pas. La répartition des ressources décrite correspond à la répartition par exemple des ressources processeur. Mais la répartition des autres ressources, notamment mémoire vive, entrées/sorties, réseau, est effectuée de manière similaire. Les différentes ressources peuvent être réparties de manière différente, par exemple 75%/25% entre les deux containers pour les ressources processeur, avec la plus grande partie affectée au container prioritaire, et 50%/50% entre les deux containers pour les ressources mémoire vive.

La figure 2 correspond à l'exécution normale d'une tâche standard au niveau du container standard 5. Ainsi, tant qu'une tâche prioritaire ne survient pas, les ressources processeur disponibles du nœud 1 sont affectées à son container standard 5 pour exécuter une tâche standard, son container prioritaire 8 n'exécutant pas de tâche. Une faible partie des ressources processeur reste tout de même affectée au container prioritaire 8 pour pouvoir l'ouvrir et le maintenir en veille, cette faible partie restant le plus souvent inférieure à 5% des ressources processeur du nœud 1, et valant avantageusement entre 2% et 3% des ressources processeur du nœud 1. L'absence de la case application 9 montre que le container prioritaire 8 n'exécute pas de tâche. Une forte partie des ressources processeur est alors affectée au container standard 5, lequel exécute une tâche standard, cette forte partie restant le plus souvent supérieure à 95% des ressources processeur du nœud 1, et valant avantageusement entre 97% et 98% des ressources processeur du nœud 1. Cette répartition des ressources processeur en faveur du container standard 5 qui exécute une tâche standard au détriment du container prioritaire 8 qui n'exécute pas de tâche a été effectuée par le groupe de contrôle 11 du noyau 3.

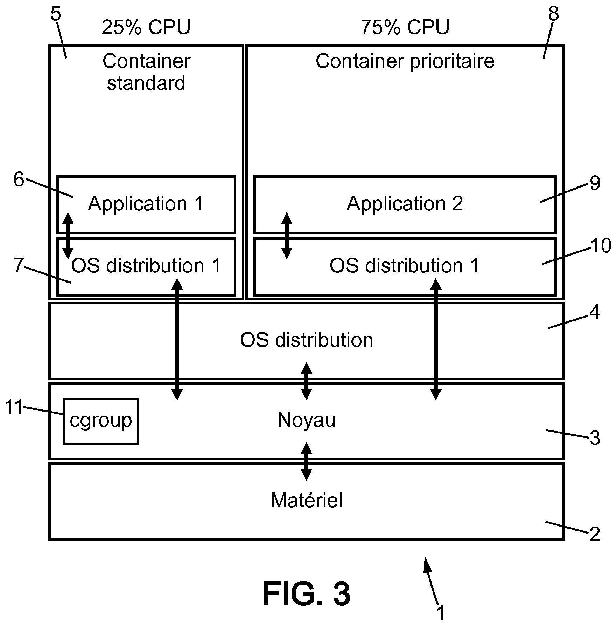

La figure 3 représente schématiquement un exemple de fonctionnement de nœud sur lequel ont été lancés deux containers, selon un mode de réalisation de l'invention, lorsqu'une tâche prioritaire survient. Une tâche prioritaire est fournie par l'ordonnanceur de tâches (« batch scheduler » en langue anglaise), non représenté sur la figure, qui gère la queue des tâches en attente d'être exécutées au niveau des nœuds en général et au niveau du nœud 1 en particulier.

Lorsqu'une tâche prioritaire survient, le groupe de contrôle 11 du noyau 3 réalise un basculement dynamique d'une partie seulement des ressources processeur de son container standard 5 vers son container prioritaire 8, de manière à ce que, d'une part la tâche prioritaire soit exécutée dans le container prioritaire 8 avec la partie basculée des ressources processeur, et d'autre part la tâche standard continue d'être exécutée, sans être arrêtée, dans le container standard 5 avec la partie non basculée des ressources processeur.

Entre les figures 2 et 3, on voit que 70% des ressources processeur du nœud 1 ont été basculées du container standard 5 vers le container prioritaire 8. Ainsi, dans ce mode prioritaire représenté à la figure 3, le container prioritaire 8 peut réaliser rapidement et efficacement sa tâche prioritaires avec 75% des ressources processeur du nœud 1, tandis que le container standard 5 continue à exécuter au ralenti sa tâche standard avec seulement 25% des ressources processeur du nœud 1 au lieu des 95% dont il disposait dans le mode normal représenté à la figure 2.

Une fois la tâche prioritaire terminée dans le container prioritaire 8, les ressources basculées du container standard 5 vers le container prioritaire 8 sont rebasculées du container prioritaire 8 vers le container standard 5, pour aboutir à nouveau à la configuration du mode normal représenté sur la figure 2, permettant au container standard de continuer à exécuter sa tâche standard avec 95% des ressources processeur, jusqu'à ce qu'elle soit terminée ou jusqu'à ce qu'une nouvelle tâche prioritaire arrive au niveau du nœud 1.

L'arrivée simultanée ou concomitante de deux tâches prioritaires au niveau d'un nœud sur lequel une tâche standard est déjà en cours d'exécution est très rare. Pour gérer ce cas, il est possible d'ouvrir non pas deux mais trois containers ou plus. Cependant, l'ouverture de nombreux containers oisifs la plupart du temps utilise des ressources inutilement et fait chuter les performances globales du nœud. Par conséquent, préférentiellement seulement deux containers sont lancés sur un même nœud, et pas plus. La deuxième tâche prioritaire devrait alors être mise en attente jusqu'à la fin de la première tâche prioritaire. Une tâche prioritaire prend généralement moins de temps, voire beaucoup moins de temps qu'une tâche standard, à égale utilisation des ressources du nœud.

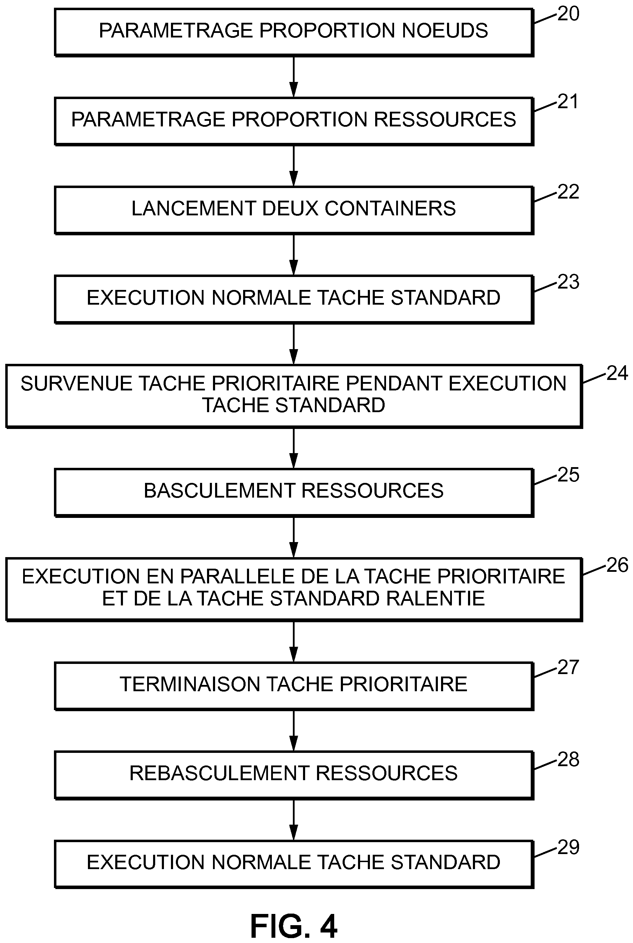

La figure 4 représente schématiquement un exemple de déroulement des étapes de la méthode d'ordonnancement de tâches selon un mode de réalisation de l'invention.

La méthode d'ordonnancement de tâches déroule successivement une étape 20 de paramétrage de la proportion de nœuds concernés, une étape 21 de paramétrage de la proportion de ressources, une étape 22 de lancement des deux containers, une étape 23 d'exécution normale d'une tâche standard, la survenue 24 d'une tâche prioritaire pendant l'exécution de la tâche standard, une étape 25 de basculement des ressources, une étape 26 d'exécution en parallèle de la tâche prioritaire et de la tâche standard ralentie, la terminaison 27 de l'exécution de la tâche prioritaire, une étape 28 de rebasculement des ressources, une étape 29 d'exécution normale de la tâche standard.

Dans l'étape 20 de paramétrage de la proportion de nœuds concernés par le lancement simultané de deux containers, l'administrateur du cluster décide du nombre et du type de nœuds sur lesquels deux containers vont être simultanément lancés, un container standard pour exécuter les tâches standard et un container prioritaire pour exécuter les tâches prioritaires. L'ordonnanceur de tâches du cluster verra, au niveau du nœud, en fait deux nœuds virtuels constitués par les deux containers, standard et prioritaire, du nœud. Les autres nœuds fonctionneront classiquement et seront vus par l'ordonnanceur de tâches chacun comme un nœud réel.

Dans l'étape 21 de paramétrage de la proportion de ressources, sur chaque nœud, pour chaque type de ressource, notamment ressource processeur et ressource mémoire vive et ressources entrées/sorties et ressources réseau, va être paramétrée la répartition des ressources entre le container standard et le container prioritaire, en cas de survenue de tâche prioritaire, l'essentiel des ressources restant affecté au container standard tant qu'une telle tâche prioritaire ne survient pas. Par exemple, lorsqu'une tâche prioritaire survient, le groupe de contrôle redimensionne les containers de manière à ce que le container prioritaire commence à disposer d'environ 75% des ressources processeur, 50% des ressources mémoire vive, 25% des ressources entrées/sorties, 50% des ressources réseau, tandis que le container standard va conserver environ 25% des ressources processeur, 50% des ressources mémoire vive, 75% des ressources entrées/sorties, 50% des ressources réseau. Préférentiellement, la répartition des ressources entre container standard et container prioritaire est identique ou similaire pour l'ensemble des nœuds concernés, mais elle peut être différente par groupe de nœuds ou même varier d'un nœud à l'autre. En option, il est possible que l'un des types de ressources, par exemple les ressources réseau, ne soit pas du tout prévu pour être basculé du container standard vers le container prioritaire, lorsqu'une tâche prioritaire survient, si le type de tâches prioritaires susceptibles de survenir ne requiert jamais ce type de ressources.

Dans l'étape 22 de lancement des deux containers, les deux containers, un container standard et un container prioritaire sont lancés sur chacun des nœuds concernés du cluster.

Dans l'étape 23 d'exécution normale d'une tâche standard, le container standard, disposant d'au moins 95% des ressources disponibles, moins de 5% étant affecté au container prioritaire n'exécutant pas de tâche, déroule normalement l'exécution d'une tâche standard, donc à vitesse normale.

Lors de la survenue 24 d'une tâche prioritaire pendant l'exécution de la tâche standard, le groupe de contrôle se prépare à effectuer le basculement des ressources prévu à l'étape 21 de paramétrage de la proportion de ressources.

Dans l'étape 25 de basculement des ressources, l'affectation des ressources entre les deux containers est rééquilibrée au profit du conteneur prioritaire qui prend une partie notable ou même préférentiellement la majorité des ressources auparavant affectées au container standard, tout en laissant au container standard suffisamment de ressources pour pouvoir continuer à effectuer sa tâche standard, même sur un mode ralenti, afin que tout le travail déjà effectué pour la tâche standard par le container standard ne soit pas perdu mais soit au contraire conservé.

Dans l'étape 26 d'exécution en parallèle de la tâche prioritaire et de la tâche standard ralentie, d'une part la tâche prioritaire est exécutée dans le container prioritaire avec les ressources basculées, et d'autre part la tâche standard continue d'être exécutée dans le container standard avec des ressources réduites, à savoir les ressources non basculées, sur un mode ralenti.

Lors de la terminaison 27 de l'exécution de la tâche prioritaire, le groupe de contrôle se prépare à rebasculer, du container prioritaire vers le container standard, les ressources qui avaient été préalablement basculées, du container standard vers le container prioritaire.

Dans l'étape 28 de rebasculement des ressources, le container prioritaire ne conserve que moins de 5% des ressources disponibles pour rester ouvert et rester prêt à exécuter une future tâche prioritaire, tandis que le container standard reprend plus de 95% des ressources disponibles pour continuer à exécuter la tâche standard qu'il n'avait jamais arrêtée, mais cette fois à nouveau à vitesse normale et non plus à vitesse ralentie comme au cours de l'étape 26 d'exécution en parallèle des tâches.

Dans l'étape 29 d'exécution normale de la tâche standard, la tâche standard est exécutée dans le container standard avec l'essentiel voire la quasi-totalité des ressources du nœud, comme au cours de l'étape 23, et ceci, jusqu'à l'arrivée d'une nouvelle tâche prioritaire qui fait reprendre le processus au niveau de la survenue 24 de tâche prioritaire précédemment décrite.

Bien entendu, la présente invention n'est pas limitée aux exemples et au mode de réalisation décrits et représentés, mais elle est susceptible de nombreuses variantes accessibles à l'homme de l'art.

## Revendications

1. Méthode d'ordonnancement de tâches, au niveau d'au moins certains nœuds (1) d'un cluster informatique, comprenant :
- d'abord, le lancement (22) de deux containers (5, 8) sur chacun desdits nœuds (1), un container standard (5) et un container prioritaire (8),
- ensuite, pour tout ou partie desdits nœuds (1) à deux containers (5, 8), au niveau de chaque nœud (1),
∘ tant qu'une tâche prioritaire ne survient pas, l'affectation de ou des ressources disponibles du nœud (1) à son container standard (5) pour exécuter une tâche standard, son container prioritaire (8) n'exécutant pas de tâche,
∘ lorsqu'une tâche prioritaire survient, le basculement (25) dynamique d'une partie seulement des ressources de son container standard (5) vers son container prioritaire (8), de manière à ce que, d'une part la tâche prioritaire soit exécutée dans le container prioritaire (8) avec la partie basculée des ressources, et d'autre part la tâche standard continue d'être exécutée, sans être arrêtée, dans le container standard (5) avec des ressources réduites qui sont la partie non basculée des ressources, sur un mode ralenti.

2. Méthode de séquencement de tâches selon la revendication 1, **caractérisée en ce que**, tant qu'une tâche prioritaire ne survient pas, toutes les ressources disponibles du nœud (1) sont affectées à son container standard (5).

3. Méthode de séquencement de tâches selon la revendication 1 ou 2, **caractérisée en ce que**, tant qu'une tâche prioritaire ne survient pas, au moins 90%, de préférence au moins 95%, des ressources du nœud (1) sont affectées au container standard (5), et/ou moins de 5% des ressources du nœud (1) sont affectées au container prioritaire (8).

4. Méthode de séquencement de tâches selon l'une quelconque des revendications précédentes, **caractérisée en ce que**, une fois la tâche prioritaire terminée (27), les ressources ayant été basculées du container standard (5) vers le container prioritaire (8) sont rebasculées (28) du container prioritaire (8) vers le container standard (5).

5. Méthode de séquencement de tâches selon l'une quelconque des revendications précédentes, **caractérisée en ce que**, lorsqu'une tâche prioritaire survient (24), le basculement (25) des ressources est effectué par un ou plusieurs groupes de contrôle (11) de virtualisation au niveau système d'exploitation disposés dans la couche noyau (3) du nœud (1).

6. Méthode de séquencement de tâches selon l'une quelconque des revendications précédentes, **caractérisée en ce que** chaque container (5, 8) possède son système d'exploitation (7, 10) lui permettant de communiquer directement avec le noyau (3) du nœud (1) hôte de ces containers standard (5) et prioritaire (8), indépendamment du système d'exploitation (4) dudit nœud (1) hôte.

7. Méthode de séquencement de tâches selon l'une quelconque des revendications précédentes, **caractérisée en ce que** ladite méthode est effectuée au niveau de la majorité des nœuds (1) dudit cluster informatique, de préférence au niveau de tous les nœuds (1) dudit cluster informatique.

8. Méthode de séquencement de tâches selon l'une quelconque des revendications précédentes, **caractérisée en ce qu'**au moins l'un des nœuds (1) à deux containers (5, 8), de préférence plusieurs nœuds (1) à deux containers (5, 8), plus de préférence la majorité des nœuds (1) à deux containers (5, 8), encore plus de préférence tous les nœuds (1) à deux containers (5, 8), est ou sont des nœuds de calcul.

9. Méthode de séquencement de tâches selon l'une quelconque des revendications précédentes, **caractérisée en ce que** chaque container (5, 8) est un container Linux.

10. Méthode de séquencement de tâches selon l'une quelconque des revendications précédentes, **caractérisée en ce que** les ressources comprennent à la fois les ressources processeur et les ressources mémoire vive du nœud (1).

11. Méthode de séquencement de tâches selon la revendication 10, **caractérisée en ce que** toutes les ressources, processeur et mémoire vive, d'une même puce électronique du nœud ou d'un même réceptacle de processeur ou de mémoire vive sont affectées au même container, soit toutes au container standard (5) soit toutes au container prioritaire (8).

12. Méthode de séquencement de tâches selon l'une quelconque des revendications précédentes, **caractérisée en ce que** les ressources comprennent également les ressources entrées/sorties et les ressources réseau du nœud (1).

13. Méthode de séquencement de tâches selon l'une quelconque des revendications précédentes, **caractérisée en ce que** la proportion des ressources à basculer du container standard (5) vers le container prioritaire (8) est paramétrable par l'administrateur du cluster.

14. Méthode de séquencement de tâches selon l'une quelconque des revendications précédentes, **caractérisée en ce que**, lorsqu'une tâche prioritaire survient (24), au moins 50%, de préférence au moins 75% des ressources processeur du container standard (5) sont basculées vers le container prioritaire (8), et/ou, lorsqu'une tâche prioritaire survient (24), au moins 50%, de préférence au moins 75% des ressources mémoire vive du container standard (5) sont basculées vers le container prioritaire (8).

15. Cluster informatique comprenant :
- plusieurs nœuds (1),
- un ordonnanceur de tâches à affecter auxdits nœuds (1), configuré, pour au moins certains desdits nœuds (1), de manière à :
∘ d'abord, lancer (22) deux containers (5, 8) sur chacun desdits nœuds (1), un container standard (5) et un container prioritaire (8),
∘ ensuite, pour tout ou partie desdits nœuds (1) à deux containers (5, 8), au niveau de chaque nœud (1),
▪tant qu'une tâche prioritaire ne survient pas, affecter des ressources du nœud (1) à son container standard (5) pour exécuter une tâche standard, son container prioritaire (8) n'exécutant pas de tâche,
▪lorsqu'une tâche prioritaire survient, basculer (25) dynamiquement une partie seulement des ressources de son container standard (5) vers son container prioritaire (8), de manière à ce que, d'une part la tâche prioritaire soit exécutée dans le container prioritaire (8) avec la partie basculée des ressources, et d'autre part la tâche standard continue d'être exécutée, sans être arrêtée, dans le container standard (5) avec des ressources réduites qui sont la partie non basculée des ressources, sur un mode ralenti.

16. Ordonnanceur de tâches à affecter aux nœuds (1) d'un cluster informatique, configuré, pour au moins certains desdits nœuds (1), de manière à :
- d'abord, lancer (22) deux containers (5, 8) sur chacun desdits nœuds (1), un container standard (5) et un container prioritaire (8),
- ensuite, pour tout ou partie desdits nœuds (1) à deux containers (5, 8), au niveau de chaque nœud (1),
∘ tant qu'une tâche prioritaire ne survient pas, affecter des ressources du nœud (1) à son container standard (5) pour exécuter une tâche standard, son container prioritaire (8) n'exécutant pas de tâche,
∘ lorsqu'une tâche prioritaire survient, basculer (25) dynamiquement une partie seulement des ressources de son container standard (5) vers son container prioritaire (8), de manière à ce que, d'une part la tâche prioritaire soit exécutée dans le container prioritaire (8) avec la partie basculée des ressources, et d'autre part la tâche standard continue d'être exécutée, sans être arrêtée, dans le container standard (5) avec des ressources réduites qui sont la partie non basculée des ressources, sur un mode ralenti.

## Patentansprüche

1. Verfahren zum Planen von Aufgaben an wenigstens einigen Knoten (1) eines Computerclusters, umfassend:
- zunächst Starten (22) von zwei Containern (5, 8) an jedem der Knoten (1), einem Standardcontainer (5) und einem Prioritätscontainer (8),
- dann, für alle oder einen Teil der Knoten (1) mit zwei Containern (5, 8) an jedem Knoten (1),
∘ solange keine Prioritätsaufgabe auftritt, Zuweisung der verfügbaren Ressource(n) des Knotens (1) an seinen Standardcontainer (5) zur Ausführung einer Standardaufgabe, wobei sein Prioritätscontainer (8) keine Aufgabe ausführt,
∘ wenn eine Prioritätsaufgabe auftritt, dynamische Verschiebung (25) nur eines Teils der Ressourcen von seinem Standardcontainer (5) zu seinem Prioritätscontainer (8), so dass einerseits die Prioritätsaufgabe im Prioritätscontainer (8) mit dem verschobenen Teil der Ressourcen ausgeführt wird und andererseits die Standardaufgabe im Standardcontainer (5) mit reduzierten Ressourcen, die den nicht verschobenen Teil der Ressourcen darstellen, in einem verlangsamten Modus weiter ausgeführt wird, ohne gestoppt zu werden.

2. Verfahren zur Sequenzierung von Aufgaben nach Anspruch 1, **dadurch gekennzeichnet, dass**, solange keine Prioritätsaufgabe auftritt, alle verfügbaren Ressourcen des Knotens (1) seinem Standardcontainer (5) zugewiesen werden.

3. Verfahren zur Sequenzierung von Aufgaben nach Anspruch 1 oder 2, **dadurch gekennzeichnet, dass**, solange keine Prioritätsaufgabe auftritt, wenigstens 90 %, bevorzugt wenigstens 95 %, der Ressourcen des Knotens (1) dem Standardcontainer (5) zugewiesen werden und/oder weniger als 5 % der Ressourcen des Knotens (1) dem Prioritätscontainer (8) zugewiesen werden.

4. Verfahren zur Sequenzierung von Aufgaben nach einem der vorhergehenden Ansprüche, **dadurch gekennzeichnet, dass** nach Abschluss der Prioritätsaufgabe (27) die Ressourcen, die vom Standardcontainer (5) zu dem Prioritätscontainer (8) verschoben wurden, vom Prioritätscontainer (8) zu dem Standardcontainer (5) zurückverschoben werden (28).

5. Verfahren zur Sequenzierung von Aufgaben nach einem der vorhergehenden Ansprüche, **dadurch gekennzeichnet, dass**, wenn eine Prioritätsaufgabe (24) auftritt, die Verschiebung (25) der Ressourcen durch eine oder mehrere Virtualisierungssteuerungsgruppen (11) auf Betriebssystemebene durchgeführt wird, die in der Kernschicht (3) des Knotens (1) angeordnet sind.

6. Verfahren zur Sequenzierung von Aufgaben nach einem der vorhergehenden Ansprüche, **dadurch gekennzeichnet, dass** jeder Container (5, 8) sein eigenes Betriebssystem (7, 10) umfasst, welches ihm erlaubt, direkt mit dem Kern (3) des Knotens (1), der diese Standard- (5) und Prioritätscontainer (8) aufnimmt, zu kommunizieren, unabhängig vom Betriebssystem (4) des Host-Knotens (1).

7. Verfahren zur Sequenzierung von Aufgaben nach einem der vorhergehenden Ansprüche, **dadurch gekennzeichnet, dass** das Verfahren auf der Ebene der Mehrzahl der Knoten (1) des Computer-Clusters, bevorzugt auf der Ebene aller Knoten (1) des Computer-Clusters, durchgeführt wird.

8. Verfahren zur Sequenzierung von Aufgaben nach einem der vorhergehenden Ansprüche, **dadurch gekennzeichnet, dass** wenigstens einer der Knoten (1) mit zwei Containern (5, 8), bevorzugt mehrere Knoten (1) mit zwei Containern (5, 8), stärker bevorzugt die Mehrzahl der Knoten (1) mit zwei Containern (5, 8), noch stärker bevorzugt alle Knoten (1) mit zwei Containern (5, 8), Rechenknoten sind.

9. Verfahren zur Sequenzierung von Aufgaben nach einem der vorhergehenden Ansprüche, **dadurch gekennzeichnet, dass** jeder Container (5, 8) ein Linux-Container ist.

10. Verfahren zur Sequenzierung von Aufgaben nach einem der vorhergehenden Ansprüche, **dadurch gekennzeichnet, dass** die Ressourcen sowohl die Prozessorressourcen als auch die RAM-Ressourcen des Knotens (1) umfassen.

11. Verfahren zur Sequenzierung von Aufgaben nach Anspruch 10, **dadurch gekennzeichnet, dass** alle Ressourcen, Prozessor und RAM, desselben elektronischen Chips des Knotens oder desselben Prozessor- oder RAM-Containers demselben Container zugewiesen werden, entweder alle dem Standard-Container (5) oder alle dem Prioritätscontainer (8).

12. Verfahren zur Sequenzierung von Aufgaben nach einem der vorhergehenden Ansprüche, **dadurch gekennzeichnet, dass** die Ressourcen auch die Ein-/Ausgangsressourcen und die Netzwerkressourcen des Knotens (1) umfassen.

13. Verfahren zur Sequenzierung von Aufgaben nach einem der vorhergehenden Ansprüche, **dadurch gekennzeichnet, dass** der Anteil der vom Standard-Container (5) zu dem Prioritätscontainer (8) zu verschiebenden Ressourcen durch den Cluster-Administrator konfigurierbar ist.

14. Verfahren zur Sequenzierung von Aufgaben nach einem der vorhergehenden Ansprüche, **dadurch gekennzeichnet, dass** beim Auftreten einer Prioritätsaufgabe (24) wenigstens 50 %, bevorzugt wenigstens 75 %, der Prozessor-Ressourcen des Standardcontainers (5) zu dem Prioritätscontainer (8) verschoben werden, und/oder beim Auftreten einer Prioritätsaufgabe (24) wenigstens 50 %, bevorzugt wenigstens 75 %, der RAM-Ressourcen des Standardcontainers (5) zu dem Prioritätscontainer (8) verschoben werden.

15. Computer-Cluster, umfassend:
- mehrere Knoten (1),
- einen Planer von Aufgaben, die den Knoten (1) zuzuweisen sind, welcher für wenigstens einige der Knoten (1) wie folgt konfiguriert ist:
∘ zunächst Starten (22) von zwei Containern (5, 8) an jedem der Knoten (1), einem Standardcontainer (5) und einem Prioritätscontainer (8),
∘ dann für alle oder einen Teil der genannten Knoten (1) zwei Container (5, 8) an jedem Knoten (1),
• solange keine Prioritätsaufgabe auftritt, Zuweisung von Ressourcen des Knotens (1) an seinen Standard-Container (5) zur Ausführung einer Standardaufgabe, wobei sein Prioritätscontainer (8) keine Aufgabe ausführt,
• wenn eine Prioritätsaufgabe auftritt, dynamisches Verschieben (25) nur eines Teils der Ressourcen von seinem Standardcontainer (5) zu seinem Prioritätscontainer (8), so dass einerseits die Prioritätsaufgabe im Prioritätscontainer (8) mit dem verschobenen Teil der Ressourcen ausgeführt wird und andererseits die Standardaufgabe im Standardcontainer (5) mit reduzierten Ressourcen, die den nicht verschobenen Teil der Ressourcen darstellen, in einem verlangsamten Modus weiter ausgeführt wird, ohne gestoppt zu werden.

16. Planer von Aufgaben, die den Knoten (1) eines Computer-Clusters zuzuweisen sind, welcher für wenigstens einige der Knoten (1) wie folgt konfiguriert ist:
- zunächst Starten (22) von zwei Containern (5, 8) an jedem der Knoten (1), einem Standardcontainer (5) und einem Prioritätscontainer (8),
- dann für alle oder einen Teil der Knoten (1) mit zwei Containern (5, 8), an jedem Knoten (1),
∘ solange keine Prioritätsaufgabe auftritt, Zuweisung von Ressourcen des Knotens (1) an seinen Standard-Container (5), zur Ausführung einer Standardaufgabe, wobei sein Prioritätscontainer (8) keine Aufgabe ausführt,
∘ wenn eine Prioritätsaufgabe auftritt, dynamisches Verschieben (25) nur eines Teils der Ressourcen von seinem Standardcontainer (5) zu seinem Prioritätscontainer (8), so dass einerseits die Prioritätsaufgabe im Prioritätscontainer (8) mit dem verschobenen Teil der Ressourcen ausgeführt wird und andererseits die Standardaufgabe im Standardcontainer (5) mit reduzierten Ressourcen, die den nicht verschobenen Teil der Ressourcen darstellen, in einem verlangsamten Modus weiter ausgeführt wird, ohne gestoppt zu werden.

## Claims

1. Method for scheduling jobs at at least some nodes (1) of a computer cluster, comprising:
- firstly running (22) two containers (5, 8) on each of said nodes (1), a standard container (5) and a priority container (8),
- then, for all or part of said nodes (1) with two containers (5, 8), at each node (1),
-- as long as a priority job does not occur, allocating one or more available resources of the node (1) to the standard container (5) thereof to execute a standard job, the priority container (8) thereof not executing any jobs,
-- when a priority job occurs, dynamically switching (25) only a part of the resources from the standard container (5) thereof to the priority container (8) thereof, such that, on the one hand, the priority job is executed in the priority container (8) with the switched part of the resources, and on the other hand, the standard job continues to be executed, without being halted, in the standard container (5) with reduced resources which are made up of the non-switched part of the resources, in a slow mode.

2. Job sequencing method according to claim 1, **characterised in that**, as long as a priority job does not occur, all available resources of the node (1) are allocated to the standard container (5) thereof.

3. Job sequencing method according to claim 1 or 2, **characterised in that**, as long as a priority job does not occur, at least 90%, preferably at least 95%, of the resources of the node (1) are allocated to the standard container (5), and/or less than 5% of the resources of the node (1) are allocated to the priority container (8).

4. Job sequencing method according to any one of the preceding claims, **characterised in that**, once the priority job has been completed (27), the resources that were switched from the standard container (5) to the priority container (8) are switched back (28) from the priority container (8) to the standard container (5).

5. Job sequencing method according to any one of the preceding claims, **characterised in that**, when a priority job occurs (24), the switching (25) of the resources is carried out by one or more virtualisation control groups (11) at operating system distribution level, disposed in the kernel layer (3) of the node (1).

6. Job sequencing method according to any one of the preceding claims, **characterised in that** each container (5, 8) has its own operating system distribution (7, 10) allowing it to communicate directly with the kernel (3) of the host node (1) of these standard (5) and priority (8) containers, independently of the operating system distribution (4) of said host node (1).

7. Job sequencing method according to any one of the preceding claims, **characterised in that** said method is carried out at most of the nodes (1) of said computer cluster, preferably at all of the nodes (1) of said computer cluster.

8. Job sequencing method according to any one of the preceding claims, **characterised in that** at least one of the nodes (1) with two containers (5, 8), preferably a plurality of nodes (1) with two containers (5, 8), more preferably most of the nodes (1) with two containers (5, 8), even more preferably all of the nodes (1) with two containers (5, 8), is or are compute nodes.

9. Job sequencing method according to any one of the preceding claims, **characterised in that** each container (5, 8) is a Linux container.

10. Job sequencing method according to any one of the preceding claims, **characterised in that** the resources comprise both the processor resources and the read/write memory resources of the node (1).

11. Job sequencing method according to claim 10, **characterised in that** all of the resources, the processor and the read/write memory, of the same electronic chip of the node or of the same processor socket or read/write memory socket are allocated to the same container, either all to the standard container (5) or all to the priority container (8).

12. Job sequencing method according to any one of the preceding claims, **characterised in that** the resources further comprise the input/output resources and the network resources of the node (1).

13. Job sequencing method according to any one of the preceding claims, **characterised in that** the proportion of resources to be switched from the standard container (5) to the priority container (8) can be configured by the cluster administrator.

14. Job sequencing method according to any one of the preceding claims, **characterised in that**, when a priority job occurs (24), at least 50%, preferably at least 75%, of the processor resources of the standard container (5) are switched to the priority container (8), and/or, when a priority job occurs (24), at least 50%, preferably at least 75%, of the read/write memory resources of the standard container (5) are switched to the priority container (8).

15. Computer cluster comprising:
- a plurality of nodes (1),
- a job scheduler for jobs to be allocated to said nodes (1), configured, for at least some of said nodes (1), to:
-- firstly run (22) two containers (5, 8) on each of said nodes (1), a standard container (5) and a priority container (8),
-- then, for all or part of said nodes (1) with two containers (5, 8), at each node (1),
--- as long as a priority job does not occur, allocate resources of the node (1) to the standard container (5) thereof to execute a standard job, the priority container (8) thereof not executing any jobs,
--- when a priority job occurs, dynamically switch (25) only a part of the resources from the standard container (5) thereof to the priority container (8) thereof, such that, on the one hand, the priority job is executed in the priority container (8) with the switched part of the resources, and on the other hand, the standard job continues to be executed, without being halted, in the standard container (5) with reduced resources which are made up of the non-switched part of the resources, in a slow mode.

16. Job scheduler for jobs to be allocated to the nodes (1) of a computer cluster, configured, for at least some of said nodes (1), to:
- firstly run (22) two containers (5, 8) on each of said nodes (1), a standard container (5) and a priority container (8),
- then, for all or part of said nodes (1) with two containers (5, 8), at each node (1),
-- as long as a priority job does not occur, allocate resources of the node (1) to the standard container (5) thereof to execute a standard job, the priority container (8) thereof not executing any jobs,
-- when a priority job occurs, dynamically switch (25) only a part of the resources from the standard container (5) thereof to the priority container (8) thereof, such that, on the one hand, the priority job is executed in the priority container (8) with the switched part of the resources, and on the other hand, the standard job continues to be executed, without being halted, in the standard container (5) with reduced resources which are made up of the non-switched part of the resources, in a slow mode.
